# EUROPÄISCHE PATENTSCHRIFT

(11) **EP 2 378 173 B1**
(45) Veröffentlichungstag und Bekanntmachung des Hinweises auf die Patenterteilung: **18.03.2015**
(21) Anmeldenummer: 11003049.1
(22) Anmeldetag: 12.04.2011
(51) Int. Cl.: F16L 9/14, F16L 13/02, F16L 59/14, B32B 1/08, B32B 5/20, B32B 15/08, B32B 27/32, F16L 59/20

(54) **Verfahren zum Verbinden von ummantelten Rohren mit Anbringung einer Diffusionssperrschicht und Kunststoffmantelrohr**
Method for connecting sheathed tubes with installation of a diffusion barrier layer and plastic sheath tube
Procédé de raccordement de tuyaux sous gaine en appliquant une couche barrière de diffusion et tuyau sous gaine plastique

(30) Priorität: 16.04.2010 DE 102010015462
(43) Veröffentlichungstag der Anmeldung: 19.10.2011
(73) Patentinhaber: isoplus Fernwärmetechnik GmbH, 99706 Sondershausen (DE)
(72) Erfinder: Hagedorn, Jens, 99706 Sondershausen (DE); Hartung, Carsten, 99713 Helbedündorf/OT Keula (DE); Wersenger, Oliver, 99713 Helbedündorf/OT Keula (DE); Hackel, Klaus, 99706 Sondershausen (DE)
(74) Vertreter: Hauck Patentanwaltspartnerschaft mbB

(56) Entgegenhaltungen:
- DE-A1- 3 720 577
- DE-A1-102008 048 104
- DE-U- 1 933 406

## Beschreibung

Die vorliegende Erfindung betrifft ein Verfahren zum Verbinden von ummantelten Rohren, deren Mantel eine innere Schaumschicht und eine äußere Kunststoffschicht aufweist, wobei der Mantel gegenüber dem Rand der zu verbindenden Medienrohre axial zurückspringt, mit den folgenden Schritten:
Aufschieben einer Schrumpfmuffe auf eines der zu verbindenden Rohre;
Verbinden der Mediumrohre;
Ausschäumen des zwischen den Mantelenden der beiden Rohre gebildeten Ringraumes mit Hilfe einer Schäumschalung und Entfernen der Schäumschalung.

Ein derartiges Verfahren ist aus der DE 10 2008 048 104 A1 bekannt. Bei diesem bekannten Verfahren wird nach dem Entfernen der Schäumschalung die Schrumpfmuffe über den ausgeschäumten Ringraum geschoben und auf diesen aufgeschrumpft. Dadurch, dass zum Ausschäumen eine gesonderte Schäumschalung verwendet wird, die nach dem Ausschäumen entfernt wird, kann die Qualität des Schaumes überprüft werden. Danach wird die Schrumpfmuffe in bekannter Weise aufgeschrumpft, wobei die Schrumpfmuffe so aufgeschrumpft wird, dass sie die Mäntel der zu verbindenden Rohre überlappt.

Die hier in Rede stehenden ummantelten Rohre finden ins besondere als Fernwärmerohre Verwendung. Die Rohre bestehen zumindest aus einem Mediumrohr, bei dem es sich üblicherweise um ein Stahlrohr handelt, und einem Rohrmantel, der sich aus einer inneren Schaumschicht zur Wärmedämmung und einer äußeren Kunststoffschicht, die die äußere Abdeckung bildet, zusammensetzt. Wenn solche Rohre, insbesondere Fernwärmerohre, verbunden werden sollen, muss an den Rohrenden der Mantel, d.h. sowohl die innere Schaumschicht als auch die äußere Kunststoffschicht, entfernt werden, so dass die Mediumrohre freiliegen. Erst dann ist eine Verbindung der Mediumrohre, beispielsweise Stahlrohre durch Verschweißen, möglich. Im Anschluss daran ist es notwendig, den Rohrmantel, insbesondere die zur Wärmedämmung dienende Schaumschicht, an der Verbindungsstelle wiederherzustellen.

Solche Kunststoffmantelrohre finden, wie erwähnt, überwiegend im Fernwärmeleitungsbau Verwendung. Die Durchmesser der Mantelrohre liegen in der Regel zwischen 90 und 1.200 mm, wobei auch größere Durchmesser möglich sind. Die zur Isolierung dienende Schaumschicht besteht in der Regel aus einem Hartschaum. Die äußere Abdeckung stellt einen mechanischen Schutzmantel dar und besteht häufig aus Polyethylen. Bei derartigen Rohren ist es insbesondere von Bedeutung, eine Alterung der Schaumschicht zu verhindern bzw. zu verlangsamen. Solche Isolierungen, insbesondere Hartschaumisolierungen, speziell aus Polyurethanschaum, altern nämlich, und zwar insbesondere bei hohen Temperaturen oberhalb von ca. 120 °C. Dadurch verschlechtert sich nicht nur der Wärmedämmwert, sondern auch der mechanische Haftverbund wird in Mitleidenschaft gezogen. Ein derartiges Alterungsverhalten wird auf die durch das Kunststoffaußenrohr eindringenden Gase, insbesondere Sauerstoff, zurückgeführt. Durch den eindringenden Sauerstoff entstehen innerhalb der Isolierung Oxidationsprozesse, die zu einer Eigenschaftsverschlechterung der Isolierung führen. Gleichzeitig diffundiert CO₂ nach außen.

Aus der WO 2004/003423 A1 ist ein isoliertes Rohr mit einem oder mehreren Innenrohren und einem Isolationsschaum, der das Innenrohr umgibt, bekannt. Das Rohr weist eine diffusionsregulierende Schicht auf, die auf die Außenseite des Schaums aufgebracht ist. Des Weiteren kann das Rohr ein Außenrohr aus einem haltbaren Material, vorzugsweise Polyethylen, besitzen. Die diffusionsreglulierende Schicht kann zwischen dem Polyethylen-Außenrohr und dem Polyurethanschaum oder auf der Außenseite des Polyethylen-Außenrohres angeordnet sein.

In der nichtvorveröffentlichten deutschen Patentanmeldung 10 2009 060 131.7 ist bereits ein Kunststoffmantelrohr vorgeschlagen worden, das ein Mediumrohr, insbesondere aus Stahl, ein als mechanischer Schutzmantel dienendes Außenrohr und eine den Ringspalt zwischen Mediumrohr und Außenrohr ausfüllende, zur Wärmedämmung dienende Isolierung aufweist. Hierbei ist das Außenrohr als Mehrschichtrohr ausgebildet und weist in seinem Inneren eine in das Außenrohr integrierte, aus einem Kunststoff bestehende Gaspermeationssperrschicht auf.

Es ist daher bereits bekannt, bei derartigen Mantelrohren bzw. ummantelten Rohren eine diffusionsregulierende Schicht bzw. eine Gaspermeationssperrschicht vorzusehen, um zu verhindern, dass die Außenatmosphäre, insbesondere Sauerstoff, mit der inneren Schaumschicht in Kontakt tritt und deren-Alterung bewirkt bzw. beschleunigt.

Der vorliegenden Erfindung liegt nunmehr die Aufgabe zugrunde, ein Verfahren zum Verbinden von ummantelten Rohren zu schaffen, mit dem eine Gasdiffusion auch an einer Verbindungsstelle zwischen den Rohren verhindert bzw. vermindert werden kann.

Diese Aufgabe wird bei einem Verfahren der eingangs beschriebenen Art erfindungsgemäß durch die folgenden weiteren Schritte gelöst:
Legen bzw. Wickeln einer Gaspermeationssperrfolie um den ausgeschäumten Ringraum derart, dass die Gaspermeationssperrfolie die Mantelenden der zu verbindenden Rohre überlappt;
seitliches Abdichten der Gaspermeationssperrfolie an den Rohrmänteln mit Hilfe von Dicht/Klebebändern und/oder einer ganzflächig auf die Gaspermeationssperrschicht aufgebrachten, länger als diese ausgebildeten Dichtfolie; und
Schieben der länger als die Gaspermeationssperrfolie ausgebildeten Schrumpfmuffe über den umwickelten Ringraum und Aufschrumpfen derselben derart, dass zwischen den Dicht/ Klebebändern und/oder der Dichtfolie und der Gaspermeationssperrfolie ein Haftverbund entsteht.

Mit dem erfindungsgemäßen Verfahren gelingt es, Verbindungsstellen von Kunststoffmantelrohren mit einer Gaspermeationssperre zu versehen, ohne dass hierdurch die Qualität der Verbindung leidet. Der zwischen den Mantelenden der beiden Rohre gebildete Ringraum wird mit Hilfe einer speziellen Schäumschalung ausgeschäumt und die Schäumschalung wird entfernt, wie dies beispielsweise in der DE 10 2008 048 104 A1 beschrieben ist. Auf diese Weise kann die Schaumfüllung auf ihre Qualität überprüft werden. Eine verlorene Schalung, die die Schaumfüllung abdeckt, findet erfindungsgemäß keine Verwendung.

Nach dem Entfernen und dem Überprüfen der hergestellten Schaumfüllung wird eine Gaspermeationssperrfolie um den ausgeschäumten Ringraum gelegt oder gewickelt, und zwar derart, dass die Gaspermeationssperrfolie die Mantelenden der zu verbindenden Rohre überlappt. Auf diese Weise überbrückt die Gaspermeationssperrfolie den Spalt zwischen Rohrmantelende und Schaumfüllung. Vorzugsweise kommen bei dem erfindungsgemäßen Verfahren Kunststoffmantelrohre zum Einsatz, in deren Mantel bzw. Außenrohr eine Gaspermeationssperrschicht integriert ist, wie sie beispielsweise in der vorstehend erwähnten deutschen Patentanmeldung 10 2009 060 131.7 vorgeschlagen werden. Da die bei dem erfindungsgemäßen Verfahren eingebaute Gaspermeationsschicht die Rohre überlappt, überlappt sich die Gaspermeationssperrfolie an der Verbindungsstelle auch mit der im Rohrmantel angeordneten Gaspermeationssperrfolie, so dass die Gaspermeations-schicht nicht durch die Verbindungsstelle unterbrochen wird.

Die um den ausgeschäumten Ringraum gelegte bzw. gewickelte Gaspermeationssperrfolie wird dann seitlich an den entsprechenden Rohrmanteln mit Hilfe von Dicht/Klebebändern (Schmelzklebebändern) und/oder einer ganzflächig auf die Gaspermeationssperrschicht aufgebrachten, länger als diese ausgebildeten Dichtfolie abgedichtet. Die entsprechenden Dicht/Klebebänder bzw. die Dichtfolie werden dabei auf die Außenschicht der Rohre und die Gaspermeationssperrschicht gelegt bzw. gewickelt. Danach wird die länger als die Gaspermeationssperrfolie ausgebildete Schrumpfmuffe über den umwickelten Ringraum geschoben und derart auf diesen aufgeschrumpft, dass zwischen den Dicht/Klebebändern und/oder der Dichtfolie und der Gaspermeationssperrfolie ein Haftverbund entsteht. Beim Aufschrumpfen der Muffe verbindet sich die Gaspermeationssperrfolie vollflächig mit der Dichtfolie und stellt einen Verbund aus beiden Folien her. Die Dicht/KLebebänder und/oder der über die Gaspermeationssperrfolie seitlich überstehende Rand der Dichtfolie stellen die axiale Dichtheit der Verbindung sicher und verhindern das Eindringen von Feuchtigkeit. Die aufgeschrumpfte Muffe, die sich seitlich über die Dicht/Klebebänder bzw. die Dichtfolie hinaus erstreckt, sorgt für einen dichten Abschluss der Gesamtverbindung.

Die hergestellte Verbindung kann somit in radialer Richtung als diffusionsdicht bezeichnet werden, wobei die vorgesehene Schaumfüllung vollständig von der aufgebrachten Gaspermeationssperrfolie umhüllt ist. In axialer Richtung befindet sich zwar keine direkte Gaspermeationssperre, jedoch ist der Gasdiffusionsweg aufgrund der vorgesehenen Dicht/ Klebebänder und/oder der Dichtfolie so lang, das hier ebenfalls von Gasdichtigkeit ausgegangen werden kann.

Vorzugsweise wird bei dem erfindungsgemäßen Verfahren mit einer Dichtfolie gearbeitet, die die Gaspermeationssperrfolie und die angrenzenden Bereiche der Außenschicht der Rohre überdeckt. Durch die zum Aufschrumpfen aufgebrachte Wärmeenergie wird die Dichtfolie mit der Gaspermeationssperrfolie verbunden, wobei die Gaspermeationssperrfolie und die Dichtfolie nach dem Erkalten einen Verbund bilden, der für eine radiale und axiale Dichtigkeit des Systems sorgt.

Vorzugsweise wird eine Dichtfolie insbesondere aus Polyolefin, speziell mit Schmelzklebstoff beschichtetem Polyolefin, aufgebracht.

Bei Verwendung einer Dichtfolie zusammen mit der Gaspermeationssperrfolie werden die Dicht/Klebebänder vorzugsweise über die über die Gaspermeationssperrfolie überstehenden Randbereiche der Dichtfolie und die Rohrmäntel aufgebracht.

Als Gaspermeationssperrfolie wird vorzugsweise eine solche aus einem geeigneten Kunststoff verwendet, beispielsweise aus Ethylen-Vinylalkohol-Copolymer (EVOH). Diese Materialen sind porenfrei und chemikalien- und witterungsbeständig. Sie erfüllen die in Bezug auf das Gaspermeationssperrverhalten und eine gute Herstellbarkeit gestellten Anforderungen.

Bei einer weiteren Variante des erfindungsgemäßen Verfahrens wird eine Gaspermeationssperrfolie aus Metall, insbesondere Aluminium, verwendet. Speziell kommt eine gewalzte Aluminiumfolie zur Anwendung, die ein besonders gutes Diffusionssperrverhalten zeigt.

Um eine besonders gute Haftung der Gaspermeationssperrfolie mit den angrenzenden Schichten, insbesondere der Dichtfolie, zu erreichen, findet besonders bevorzugt eine Gaspermeationssperrfolie aus beidseitig oder einseitig mit einer Haftschicht oder Haftvermittlungsschicht versehenem Material Verwendung. Als besonders bevorzugt hat sich hierbei eine beidseitig mit Polyethylen beschichtete Folie aus gewalztem Aluminium erwiesen.

Die Erfindung wird nachfolgend anhand eines Ausführungsbeispieles in Verbindung mit der Zeichnung im Einzelnen beschrieben. Es zeigen:
- Figur 1: einen Teillängsschnitt durch eine mit dem erfindungsgemäßen Verfahren hergestellte Mantelrohrverbindung, wobei nur die Verbindung mit einem Rohrende dargestellt ist; und
- Figur 2: einen Querschnitt durch die Rohrverbindung der Figur 1.

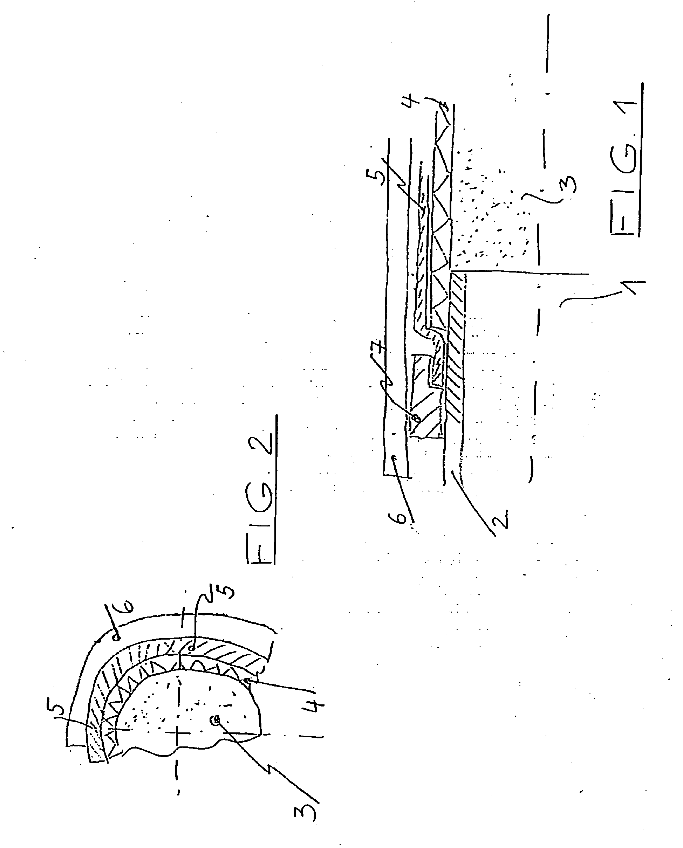

Der in Figur 1 dargestellte Längsschnitt zeigt einen Teil der herzustellenden Rohrverbindung vor dem Aufschrumpfen der Muffe 6. In der Figur ist nur der Anschluss an ein Mantelrohr 1 dargestellt. Das Mantelrohr 1 ist nur schematisch gezeigt. Es besteht aus einem zentralen Mediumrohr (nicht gezeigt), einer dieses umgebenden Isolierschaumschicht (nicht gezeigt) und einem Außenrohr 2. Das Mediumrohr besteht beispielsweise aus Stahl, der dieses umgebende Isolierschaum besteht beispielsweise aus einem Polyurethanhartschaum und das Außenrohr besteht beispielsweise aus Polyethylen und besitzt eine geeignete Dicke. Derartige Rohre sind bekannt.

Zur Herstellung einer Rohrverbindung werden die beiden gegenüberliegenden axial vorstehenden Mediumrohre miteinander verschweißt. Danach wird eine Schäumschalung (nicht gezeigt) zum Ausschäumen des sich um die verbundenen Mediumrohre herum erstreckenden Ringraumes angeordnet. Zum Ausschäumen wird der Ringraum beispielsweise mit einer Trennfolie abgedeckt, auf die die zylindrisch ausgebildete Schäumschalung aufgebracht wird. Die Schäumschalung kann beispielsweise aus zwei Halbschalen bestehen, die miteinander verspannt werden. Sie besitzt eine zentrale Öffnung zur Einbringung eines geeigneten Schaummateriales (PUR) sowie zwei beidseitig hiervon angeordnete Entlüftungsöffnungen. Über die Öffnung wird eine genau auf die Größe des Ringraumes abgestimmte Schaummaterialmenge eingebracht und zum Expandieren gebracht, so dass der gesamte Ringraum ausgeschäumt wird, wie bei 3 gezeigt.

Zum Ausschäumen kann auch eine flexible Schäumschalung Verwendung finden, die keine Trennfolie benötigt.

Nach dem Aushärten des Schaumes werden die Schäumschalung sowie die Trennfolie entfernt. Die Qualität der hergestellten Ausschäumung kann nunmehr visuell überprüft werden. Ist diese korrekt, wird der ausgeschäumte Ringraum danach mit einer Gaspermeationssperrfolie umwickelt, bei der es sich um eine beidseitig mit einer Haftschicht aus Polyethylen versehene Folie aus gewalztem Aluminium handelt. Die Aluminiumfolie ist hierbei länger ausgebildet als der Ringraum, so dass die Folie die beiden zu verbindenden Rohre 1 überlappt.

Hiernach wird eine geeignete Dichtfolie 5 aus einem mit Schmelzklebstoff, beispielsweise Butylkautschuk, geeigneten beschichteten Polyolefin auf die Gaspermeationssperrfolie 4 aufgebracht. Diese ist wiederum länger ausgebildet als die Folie 4, so dass ihre Endbereiche auf den Außenschichten 2 der Rohre 1 zu liegen kommen. Zum Niederhalten der Dichtfolie 5 auf der Außenschicht 2 wird ein Dicht/Klebeband (Schmelzklebeband) 7 aufgebracht, das aus einem geeigneten Butylkautschuk besteht. Das Dicht/Klebeband 7 wird so aufgebracht, dass es sowohl auf der Außenschicht 2 als auch auf der Dichtfolie 5 zu liegen kommt und die Dichtfolie 5 mit der Außenschicht 2 des Rohres 1 verklebt.

Als nächstes wird eine geeignete Schrumpfmuffe 6, die bereits vor dem Verbinden der Mediumrohre auf ein Rohr aufgeschoben worden ist, über den Ringraum geschoben und dort justiert. Derartige Schrumpfmuffen sind bekannt und bestehen beispielsweise aus vernetztem Polyethylen (PE-X). Durch Beaufschlagung mit Wärmeenergie erfolgt dann ein thermisches Aufschrumpfen der Schrumpfmuffe 6, die die aufgebrachten Dicht/Klebebänder 7 seitlich überragt, auf die Dichtfolie 5, die Dicht/Klebebänder und die Außenschichten 2 der Rohre. Durch das Aufschrumpfen wird zwischen der Dichtfolie 5 und der Gaspermeationssperrfolie 4 ein fester Verbund hergestellt, so dass sowohl in radialer als auch in axialer Richtung eine geeignete Abdichtung (gegen das Eindringen von Feuchtigkeit) erreicht wird.

Vorstehend wurden nur die Hauptschritte des erfindungsgemäßen Verfahrens beschrieben. Weitere erforderliche Schritte, wie Säubern der Verbindungsflächen, Vorwärmen der Abdichtungsflächen, Justieren etc., wurden nicht erwähnt.

Unmittelbar nach Beendigung des Schrumpfprozesses werden die Enden der Schrumpfmuffe mit einem wärmebeständigen Klebeband zur Niederhaltung der Schrumpfmuffenenden in der Abkühlphase abgeklebt.

Figur 2 zeigt schematisch die hergestellte Verbindung im Querschnitt. Man erkennt die Schaumfüllung 3 des Ringraumes sowie die diesen umgebende Gaspermeationssperrfolie 4. Hieran schließt sich radial nach außen die Dichtfolie 5 an, die von der aufgeschrumpften Schrumpfmuffe 6 umgeben ist.

Wesentlich ist bei dem erfindungsgemäßen Verfahren, dass durch das Aufschrumpfen der Schrumpfmuffe ein dichter Haftverbund zwischen der vorgesehenen Gaspermeationssperrfolie sowie einem Dichtungsmaterial (Dicht/Klebeband und/oder Dichtfolie) erzeugt wird, der die axiale und/oder radiale Dichtigkeit der Verbindung trotz eingebauter Diffusionssperre sicherstellt.

Die vorliegende Erfindung betrifft ferner ein Kunststoffmantelrohr mit einem Mediumrohr, einer Schaumisolierung und einem Außenrohr, das dadurch gekennzeichnet ist, dass es eine mit einem Verfahren der vorstehend beschriebenen Art hergestellte Rohrverbindung aufweist.

## Patentansprüche

1. Verfahren zum Verbinden von ummantelten Rohren (1), deren Mantel eine innere Schaumschicht und eine äußere Kunststoffschicht aufweist, wobei der Mantel gegenüber dem Rand der zu verbindenden Mediumrohre axial zurückspringt, mit den folgenden Schritten:
Aufschieben einer Schrumpfmuffe (6) auf eines der zu verbindenden Rohre;
Verbinden der Mediumrohre;
Ausschäumen des zwischen den Mantelenden der beiden Rohre gebildeten Ringraumes (3) mit Hilfe einer Schäumschalung und Entfernen der Schäumschalung;
**gekennzeichnet durch** die weiteren Schritte:
Legen bzw. Wickeln einer Gaspermeationssperrfolie (4) um den ausgeschäumten Ringraum derart, dass die Gaspermeationssperrfolie die Mantelenden der zu verbindenden Rohre überlappt;
seitliches Abdichten der Gaspermeationssperrfolie an den Rohrmänteln mit Hilfe von Dicht/Klebebändern (7) und/oder einer ganzflächig auf die Gaspermeationssperrschicht aufgebrachten, länger als diese ausgebildeten Dichtfolie; und
Schieben der länger als die Gaspermeationssperrfolie ausgebildeten Schrumpfmuffe über den umwickelten Ringraum und Aufschrumpfen derselben derart, dass zwischen den Dicht/Klebebändern und/oder der Dichtfolie und der Gaspermeationssperrfolie ein Haftverbund entsteht.

2. Verfahren nach Anspruch 1, **dadurch gekennzeichnet, dass** als Gaspermeationssperrfolie eine solche aus einem geeigneten Kunststoff verwendet wird.

3. Verfahren nach Anspruch 2, **dadurch gekennzeichnet, dass** eine Gaspermeationssperrfolie aus EthylenVinylalkohol-Copolymer (EVOH) verwendet wird.

4. Verfahren nach Anspruch 1, **dadurch gekennzeichnet, dass** eine Gaspermeationssperrfolie aus Metall, insbesondere Aluminium, verwendet wird.

5. Verfahren nach Anspruch 4, **dadurch gekennzeichnet, dass** eine Gaspermeationssperrfolie aus beidseitig oder einseitig mit einer Haftschicht oder Haftvermittlungsschicht versehenem Material verwendet wird.

6. Verfahren nach einem der vorangehenden Ansprüche, **dadurch gekennzeichnet, dass** die Dicht/Klebebänder auf die Rohrmäntel und die Randbereiche der Dichtfolie aufgebracht werden.

7. Verfahren nach einem der vorangehenden Ansprüche, **dadurch gekennzeichnet, dass** als Dichtfolie eine Folie aus thermoplastischem Kunststoff, insbesondere einem geeigneten Polyolefin, aufgebracht wird.

8. Kunststoffmantelrohr mit einem Mediumrohr (1), einer Schaumisolierung und einem Außenrohr (2), wobei es eine mit einem Verfahren der vorangehenden Ansprüche hergestellte Rohrverbindung aufweist.

## Claims

1. A method for connecting sheathed tubes the sheath of which having an inner foam layer and an outer plastic layer wherein the sheath recedes axially with respect to the edge of the medium tubes which are to be connected, the method comprising the following steps:
pushing a shrinking sleeve (6) onto one of the tubes which are to be connected;
connecting the medium tubes;
foaming the annular space (3) formed between the sheath edges of the two tubes by means of a foaming mould and removing the foaming mould;
**characterized by** the further steps:
laying or wrapping a gas permeation barrier foil (4) around the foamed annular space in such a manner that the gas permeation barrier foil overlaps the sheath ends of the tubes which are to be connected;
laterally sealing the gas permeation barrier foil and the tube sheathes by means of sealing/adhesive tapes (7) and/or by means of a sealing foil applied on the whole surface of the gas permeation barrier layer and formed longer than the gas permeation barrier layer; and
pushing the shrinking sleeve formed longer than the gas permeation barrier layer over the wrapped annular space and on-shrinking of the same such that an adhesive compound results between the sealing/adhesive tapes and/or the sealing foil and the gas permeation barrier foil.

2. The method according to claim 1, **characterized in that** a gas permeation barrier foil of an appropriate plastic material is used as gas permeation barrier foil.

3. The method according to claim 2, **characterized in that** a gas permeation barrier foil of ethylene vinyl alcohol copolymer (EVOH) is used.

4. The method according to claim 1, **characterized in that** a gas permeation barrier foil of metal, especially of aluminum, is used.

5. The method according to claim 4, **characterized in that** a gas permeation barrier foil of a material is used which is coated on one side or on both sides with an adhesive layer or a layer provided with a bonding agent.

6. The method according to one of the preceding claims, **characterized in that** the sealing/adhesive tapes are applied to the tube sheathes and the edge portions of the sealing foil.

7. The method according to one of the preceding claims, **characterized in that** a foil of thermoplastic plastic, especially of an appropriate polyolefin, is applied as sealing foil.

8. A plastic sheath tube comprising a medium tube (1), a foam insulation and an outer tube (2), wherein the plastic sheath tube has a tube connection made with a method of one of the preceding claims.

## Revendications

1. Procédé de raccordement de tuyaux (1) gainés, dont la gaine présente une couche de mousse intérieure et une couche de matière plastique extérieure, la gaine étant axialement en retrait par rapport au bord des tuyaux pour fluide à raccorder, comprenant les étapes suivantes :
pousser un manchon rétractable (6) sur un des tuyaux à raccorder ;
raccorder les tuyaux pour fluide ;
remplir de mousse l'espace annulaire (3) formé entre les extrémités de gaine des deux tuyaux à l'aide d'un coffrage de mousse et enlever le coffrage de mousse ;
**caractérisé par** les étapes supplémentaires :
placer ou enrouler une feuille faisant barrière à la perméation de gaz (4) autour de l'espace annulaire rempli de mousse de manière que la feuille faisant barrière à la perméation de gaz chevauche les extrémités de gaine des tuyaux à raccorder ;
sceller latéralement la feuille faisant barrière à la perméation de gaz sur les gaines de tuyau à l'aide de bandes étanches / adhésives (7) et/ou d'une feuille étanche appliquée de toute sa surface sur la couche faisant barrière à la perméation de gaz, conçue plus longue que celle-ci ; et
pousser le manchon rétractable conçu plus long que la feuille faisant barrière à la perméation de gaz sur l'espace annulaire enveloppé et rétracter celui-ci de manière qu'une liaison adhésive se forme entre les bandes étanches / adhésives et / ou entre la feuille étanche et la feuille faisant barrière à la perméation de gaz.

2. Procédé selon la revendication 1, **caractérisé en ce qu'**on utilise comme feuille faisant barrière à la perméation de gaz une feuille en une matière plastique appropriée.

3. Procédé selon la revendication 2, **caractérisé en ce qu'**on utilise une feuille faisant barrière à la perméation de gaz en copolymère d'éthylène-alcool vinylique (EVOH).

4. Procédé selon la revendication 1, **caractérisé en ce qu'**on utilise une feuille faisant barrière à la perméation de gaz en métal, en particulier en aluminium.

5. Procédé selon la revendication 4, **caractérisé en ce qu'**on utilise une feuille faisant barrière à la perméation de gaz en matériau pourvu des deux côtés ou d'un côté d'une couche adhésive ou d'une couche d'agent adhésif.

6. Procédé selon l'une quelconque des revendications précédentes, **caractérisé en ce que** les bandes étanches / adhésives sont appliquées sur la gaine de tuyau et les régions de bord de la feuille étanche.

7. Procédé selon l'une quelconque des revendications précédentes, **caractérisé en ce qu'**on applique comme feuille étanche une feuille en matière plastique thermoplastique, en particulier en une polyoléfine appropriée.

8. Tuyau sous gaine plastique comprenant un tuyau pour fluide (1), une isolation de mousse et un tuyau extérieur (2), le tuyau présentant un raccordement de tuyau produit avec un procédé des revendications précédentes.
